# EUROPEAN PATENT SPECIFICATION

(11) **EP 2 465 092 B1**
(45) Date of publication and mention of the grant of the patent: **11.02.2015**
(21) Application number: 10813852.0
(22) Date of filing: 02.09.2010
(51) Int. Cl.: G06T 1/00, B60R 1/00, G08G 1/16, H04N 7/18

(54) **VEHICLE VICINITY MONITORING APPARATUS**
VORRICHTUNG ZUR ÜBERWACHUNG EINER FAHRZEUGUMGEBUNG
APPAREIL DE SURVEILLANCE DE VOISINAGE DE VÉHICULE

(30) Priority: 03.09.2009 JP 2009203411
(43) Date of publication of application: 20.06.2012
(73) Proprietor: Honda Motor Co., Ltd., Minato-ku Tokyo 107-8556 (JP)
(72) Inventor: YOKOCHI, Yuji, Wako-shi Saitama 351-0193 (JP); EGUCHI, Atsuhiro, Wako-shi Saitama 351-0193 (JP); NEGORO, Masaki, Wako-shi Saitama 351-0193 (JP); TANIGUCHI, Fuminori, Wako-shi Saitama 351-0193 (JP); TAKAGI, Tomokazu, Wako-shi Saitama 351-0193 (JP); AKUTSU, Naoto, Wako-shi Saitama 351-0193 (JP)
(74) Representative: Herzog, Markus
(86) International application number: PCT/JP2010/065452
(87) International publication number: WO 2011/027907

(56) References cited:
- EP-A1- 2 023 267
- EP-A1- 2 343 695
- WO-A1-2010/047054
- JP-A- 2000 097 963
- JP-A- 2003 226 211
- JP-A- 2008 090 748
- JP-A- 2008 090 748
- JP-A- 2009 199 138

## Description

### Technical Field

The present invention relates to a vehicle vicinity monitoring apparatus for extracting an object from an infrared image (grayscale image) captured by infrared cameras and a binary image converted from the grayscale image.

### Background Art

Heretofore, there have been known vehicle vicinity monitoring apparatus for monitoring an object such as a pedestrian or the like that may possibly be on a collision course with the vehicle. The known vehicle vicinity monitoring apparatus extract the object from images (a grayscale image and a binary image thereof) in the vicinity of the vehicle captured by infrared cameras, and provide the driver of the vehicle with information about the object.

A vehicle vicinity monitoring apparatus regards high-temperature areas of images in the vicinity of the vehicle captured by a pair of left and right infrared cameras (stereographic cameras) as objects, and calculates the distances up to the objects by determining the parallax of the objects between the captured images. The vehicle vicinity monitoring apparatus then detects objects that may affect the travel of the vehicle based on the directions in which the objects move and the positions of the objects, and outputs a warning about the detected objects (see U.S. Patent Application Publications No. 2005/0063565 A1 and No. 2005/0276447 A1).

The vehicle vicinity monitoring apparatus disclosed in U.S. Patent Application Publication No. 2005/0063565 A1 determines whether the brightness dispersion of an image of an object is acceptable or not based on the result of comparison between a feature quantity of the object in a binarized image and a feature quantity of the object in a grayscale image, and changes a process of recognizing pedestrians, for thereby increasing the reliability of pedestrian recognition (see paragraphs [0244] through [0246] of U.S. Patent Application Publication No. 2005/0063565 A1).

The vehicle vicinity monitoring apparatus disclosed in U.S. Patent Application Publication No. 2005/0276447 A1 extracts objects to be binarized from a grayscale image and compares a feature value of the extracted objects with a feature value of the legs of a pedestrian stored in a pedestrian leg feature value storage means, for thereby determining whether the objects to be binarized are pedestrian legs or not. If the vehicle vicinity monitoring apparatus judges that the objects to be binarized are pedestrian legs, then the vehicle vicinity monitoring apparatus recognizes an object including the objects to be binarized as a pedestrian and hence recognizes a pedestrian in the vicinity of the vehicle (see paragraphs [0012] and [0117] of U.S. Patent Application Publication No. 2005/0276447 A1).

The vehicle vicinity monitoring apparatus of the related art described above are an excellent system for displaying an image of a less-visible pedestrian ahead of the vehicle which has been detected as an object while the vehicle is traveling at night, and notifying the driver of the presence of a pedestrian with sound and a displayed highlighted frame, for example.

However, the vehicle vicinity monitoring apparatus of the related art still have much to be improved about the detection of a bicycle rider who is pedaling a bicycle at night.

### Summary of Invention

It is an object of the present invention to provide a vehicle vicinity monitoring apparatus which is capable of detecting a bicycle rider.

This object is solved by a vehicle vicinity monitoring apparatus with the features of claim 1.

When the upper body and lower body area identifying device is to identify an area including upper and lower bodies from images acquired by the infrared cameras, grayscale images acquired by the infrared cameras or binarized images produced by binarizing the grayscale images may be used as the above images acquired by the infrared cameras.

The bicycle rider can appropriately be estimated if the object estimated by the upper body and lower body area identifying device has a feature that the upper body has a smaller time-dependent change and the lower body has a greater time-dependent change. The reference template provided in the vehicle vicinity monitoring apparatus may be a reference template of grayscale image if the area including the upper body and the lower body is represented by a grayscale image. Alternatively, the reference template may be a reference template of binarized image if the area including the upper body and the lower body is represented by a binarized image.

The reference template may comprise a first reference template including a first reference bicycle rider shape as viewed in front elevation, in which a right foot is,positioned upwardly of a left foot in the lower body shape, and a second reference template including a second reference bicycle rider shape as viewed in front elevation in which a right foot is positioned downwardly of a left foot in the lower body shape, the second reference template being the left-right reversal of the first reference template, wherein the shape change detecting device may detect the upper and lower body correlation error, using the first reference template and the second reference template.

Preferably, the vehicle vicinity monitoring apparatus may further comprise a direction-of-travel detecting device for detecting a change in the direction of travel of the bicycle rider which is the object, if each of the upper and lower body in the identified area including the upper and lower bodies, detected by the shape change detecting device, abruptly changes.

Preferably, the upper body and lower body area identifying device may include an upper body area identifying device for identifying an upper body area of the bicycle rider, i.e., the object, if three high-brightness regions estimated as a head and a right hand and a left hand which grip the handle of the bicycle are detected.

Heretofore, it has been difficult to detect a bicycle rider. However, according to the present invention, the vehicle vicinity monitoring apparatus can detect such a bicycle rider as an object highly accurately from images output from the infrared cameras.

The above and other objects, features, and advantages of the present invention will become more apparent from the following description when taken in conjunction with the accompanying drawings in which preferred embodiments of the present invention are shown by way of illustrative example.

### Brief Description of Drawings

FIG. 1 is a block diagram of a vehicle vicinity monitoring apparatus according to an embodiment of the present invention;
FIG. 2 is a schematic perspective view of a vehicle incorporating the vehicle vicinity monitoring apparatus shown in FIG. 1;
FIG. 3 is a diagram showing reference templates;
FIG. 4 is a diagram showing another reference template having a different direction;
FIG. 5 is a flowchart of an operation sequence of an image processing unit for detecting and determining an object such as a bicycle rider;
FIG. 6 is a diagram showing a succession of grayscale images that are obtained as respective frames ordered in time from above;
FIG. 7A is a diagram showing a succession of image areas including upper and lower bodies identified from respective grayscale images;
FIG. 7B is a diagram showing a succession of binarized images corresponding respectively to the image areas shown in FIG. 7A;
FIG. 8A is a diagram which is illustrative of the principles of an upper and lower body area identifying device for identifying areas including upper and lower bodies estimated as objects from grayscale images;
FIG. 8B is a diagram which is illustrative of the principles of an upper and lower body area identifying device for identifying areas including upper and lower bodies estimated as objects from binary images;
FIG. 9 is a diagram which is illustrative of the calculation of correlation errors corresponding to shape changes at times;
FIG. 10 is a diagram showing upper body correlation errors, lower body correlation errors, and differential correlation errors thereof;
FIG. 11A is a diagram showing how the head of a bicycle rider moves with respect to the road;
FIG. 11B is a diagram showing how the head of a person moves with respect to the road while the person is jogging; and
FIG. 12 is a diagram showing correlation errors at the time a bicycle rider changes its direction of travel.

### Description of Embodiments

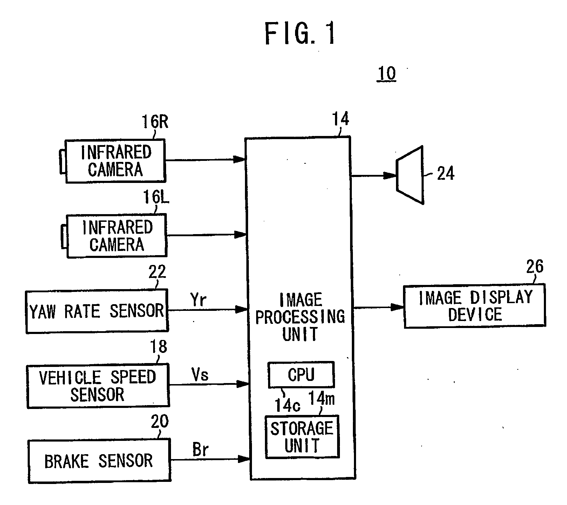

A vehicle vicinity monitoring apparatus according to an embodiment of the present invention will be described in detail below with reference to FIGS. 1 through 12.

### (Total Structure)

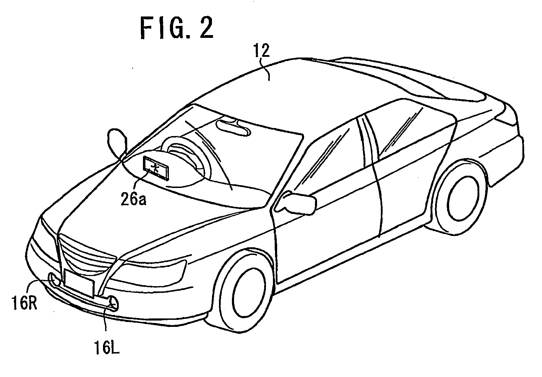

FIG. 1 is a block diagram of a vehicle vicinity monitoring apparatus 10 according to an embodiment of the present invention, and FIG. 2 is a schematic perspective view of a vehicle 12 incorporating the vehicle vicinity monitoring apparatus 10 shown in FIG. 1.

As shown in FIGS. 1 and 2, the vehicle vicinity monitoring apparatus 10 comprises an image processing unit 14 for controlling the vehicle vicinity monitoring apparatus 10, a pair of right and left infrared cameras 16R, 16L connected to the image processing unit 14, a vehicle speed sensor 18 for detecting a vehicle speed Vs of the vehicle 12, a brake sensor 20 for detecting an operated amount (brake operated amount) Br of the brake pedal depressed by the driver of the vehicle 12, a yaw rate sensor 22 for detecting a yaw rate Yr of the vehicle 12, a speaker 24 for issuing an audible warning, and an image display device 26 including a HUD (Head Up Display) 26a for displaying an image captured by the infrared cameras 16R, 16L to enable the driver to visually recognize an object such as a pedestrian or the like (a moving object) which is highly likely to stay in a collision course with the vehicle 12.

The image display device 26 may have a navigation system display unit rather than the HUD 26a.

The image processing unit 14 detects a moving object such as a pedestrian, a bicycle rider, or the like ahead of the vehicle 12 from infrared images in the vicinity of the vehicle 12 and signals (vehicle speed Vs, brake operated amount Br, and yaw rate Yr in the illustrated embodiment) representative of the traveling state of the vehicle 12, and issues a warning when the detected moving object is highly likely to stay in a collision course with the vehicle 12.

The image processing unit 14 comprises an A/D converter for converting input analog signals into digital signals, an image memory (storage unit 14m) for storing digital image signals, a CPU (Central Processing Unit) 14c for performing various processing operations, a storage unit 14m including a RAM (Random Access Memory) for storing data as they are being processed by the CPU 14c and a ROM (Read Only Memory) for storing programs executed by the CPU 14c, tables, maps, etc., and an output circuit for outputting drive signals for the speaker 24, display signals for the image display device 26, and other signals. The infrared cameras 16R, 16L, the yaw rate sensor 22, the vehicle speed sensor 18, and the brake sensor 20 produce output signals which are converted by the A/D converter into digital signals to be supplied to the CPU 14c.

The CPU 14c of the image processing unit 14 functions as various functional means (also called functional sections) by reading the supplied digital signals and executing programs, and sends drive signals (audio signals and display signals) to the speaker 24 and the image display device 26. Since these functions can also be implemented by hardware, the functional means will hereinafter be referred to as functional devices.

As shown in FIG. 2, the infrared cameras 16R, 16L, which function as so-called stereographic cameras, are disposed on a front bumper of the vehicle 12 in respective positions that are substantially symmetrical with respect to the transverse center of the vehicle 12. The infrared cameras 16R, 16L have respective optical axes extending parallel to each other and are positioned at the same height from the road on which the vehicle 12 travels. The infrared cameras 16R, 16L have such characteristics that their output signals are higher in level as the temperature of objects captured.thereby is higher.

The HUD 26a has its display screen displayed on the front windshield of the vehicle 12 at a position out of the front field of vision of the driver of the vehicle 12.

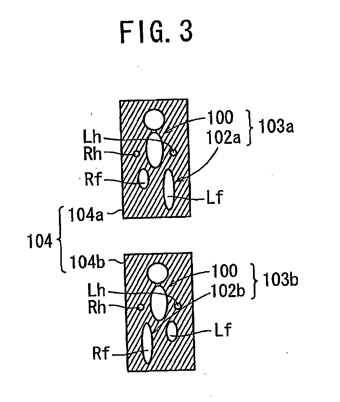

As shown in FIG. 3, the ROM (storage unit 14m) of the image processing unit 14 stores therein a reference template 104 which comprises a first reference template 104a including a reference bicycle rider shape (first reference bicycle rider shape) 103a made up of an upper body shape 100 and a lower body shape 102a, and a second reference template 104b including a reference bicycle rider shape (second reference bicycle rider shape) 103b made up of an upper body shape 100 and a lower body shape 102b. Each of the first reference template 104a and the second reference template 104b is a binary image including white areas which represent high-brightness portions such as human body parts and black areas, shown hatched, which represent low-brightness portions such as a background.

As described later, only either one of the first reference template 104a and the second reference template 104b may be stored in the storage unit 14m.

In the first reference template 104a and the second reference template 104b, the upper body shapes 100, which represent a head and a torso including hands, as viewed in front elevation in the direction from the bicycle rider toward the vehicle 12, are identical with each other, including a right hand Rh and a left hand Lh for gripping the bicycle handle. The first reference template 104a includes, in the lower body shape 102a as viewed in front elevation, the first reference bicycle rider shape 103a in which a right foot (right leg). Rf is positioned above a left foot (left leg) Lf. The second reference template 104b is the left-right reversal of the first reference template 104a (i.e., one obtained by left-right inverting the first reference template 104a), and includes, in the lower body shape 102b as viewed in front elevation, the second reference bicycle rider shape 103b in which a right foot Rf is positioned below a left foot Lf.

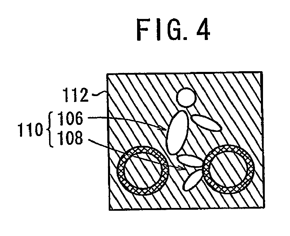

The storage unit 14m also stores therein reference templates, not shown, which correspond to the first and second reference templates, as viewed in front elevation in the direction away from the vehicle 12, a reference template 112 (see FIG. 4) including a reference bicycle rider shape 110 made up of an upper body shape 106 and a lower body shape 108 as viewed in front elevation in the direction across in front of the vehicle 12, and a reference template which is the left-right reversal of the reference template 112 (i.e., obtained by left-right inverting the reference template 112), as viewed in front elevation in the traveling direction opposite to the direction of the reference bicycle rider shape 110 shown in FIG. 4.

Operation of the vehicle vicinity monitoring apparatus 10 according to the present embodiment will be described below.

### (Operation for Detecting and Determining an Object)

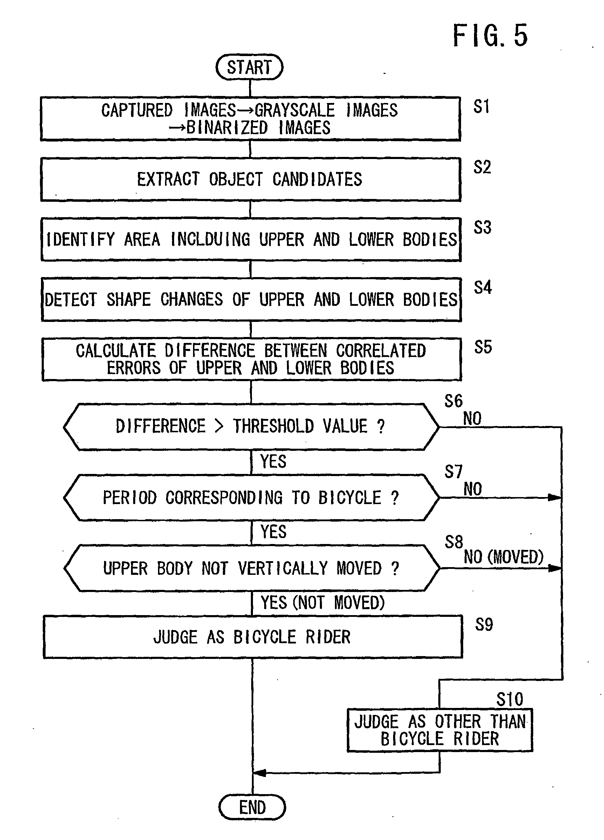

FIG. 5 is a flowchart of an operation sequence of the image processing unit 14 for detecting and determining an object such as a bicycle rider.

In step S1 shown in FIG. 5, the image processing unit 14 acquires infrared images in a certain range of field angle in front of the vehicle, which are captured in frames by the infrared cameras 16R, 16L and represented by output signals in the frames, converts the acquired infrared images into digital image signals, and stores the digital image signals as right and left grayscale images in the image memory. The right grayscale image is produced by the infrared camera 16R, and the left grayscale image is produced by the infrared camera 16L. The right grayscale image and the left grayscale image include an object at different horizontal positions therein. The distance from the vehicle 12 up to the object can be calculated based on the difference (parallax) between the different horizontal positions.

After the grayscale images are obtained in step S1, the right grayscale image, which is produced by the infrared camera 16R, is used as a reference image to binarize its image signal, i.e., any area of the grayscale image which is higher than a threshold brightness level is converted into "1" (white) and any area of the grayscale image which is lower than the threshold brightness level is converted into "0" (black). Therefore, each of the captured frames is converted into a binarized image.

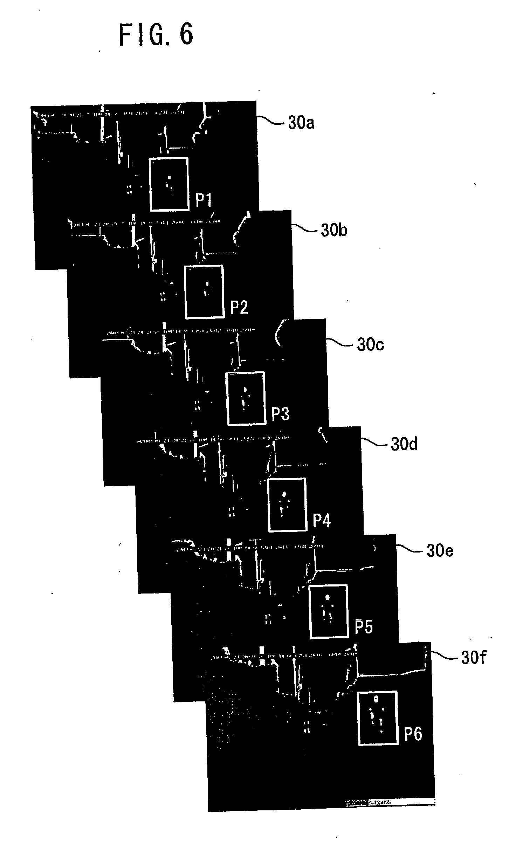

FIG. 6 shows a succession of grayscale images 30a through 30f that are obtained as respective frames ordered in time from above.

In step S2, candidates for an object, i.e., a bicycle rider who is pedaling a bicycle, are extracted for detecting the object. The object candidates are represented by high-brightness areas (white areas in binarized images) that are extracted from the grayscale images 30a through 30f or binarized images (not shown) produced therefrom.

In step S3 (upper body and lower body area identifying device), an area including an upper body and a lower body that is estimated as an object, is identified among the object candidates, which have been extracted from the grayscale images 30a through 30f or binarized images produced therefrom.

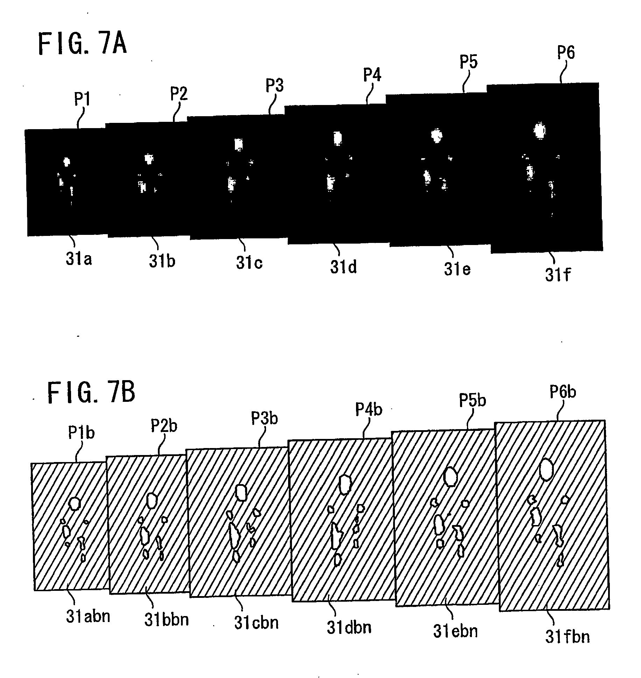

FIG. 7A shows a succession of image areas P1 through P6 including upper and lower bodies identified from the respective grayscale images 30a through 30f. FIG. 7B shows a succession of binarized images 31abn through 31fbn in image areas P1b through P6b corresponding respectively to grayscale images 31a through 31f (FIG. 7A) in the image areas P1 through P6. The binarized images 31abn through 31fbn may be interpreted as intensified images of the grayscale images 31a through 31f.

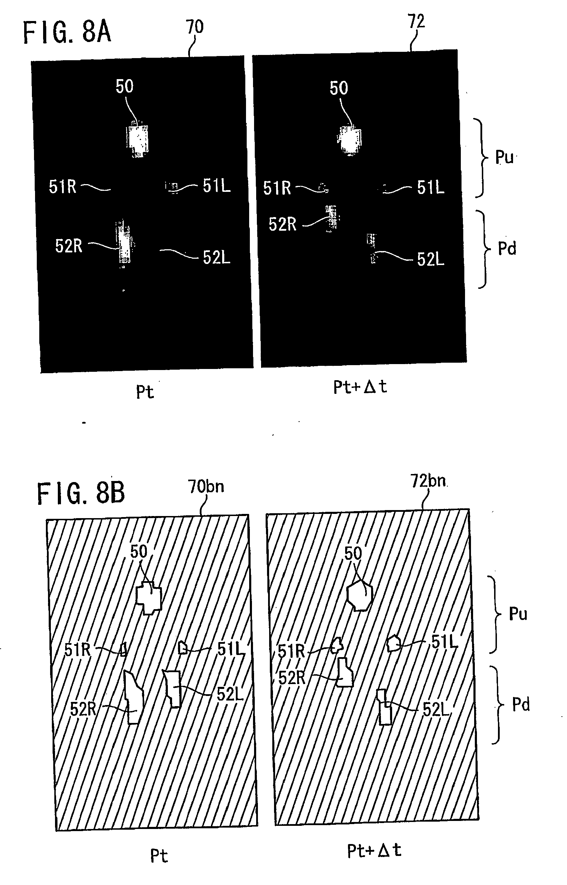

An upper body and lower body area identifying device for identifying an area including upper and lower bodies estimated as the object from the grayscale images 30a through 30f (FIG. 6) includes an upper body area identifying device. The upper body area identifying device identifies an upper body area Pu of the bicycle rider, i.e., the object, if three high-brightness regions estimated as a head 50 and a right hand 51R and a left hand 51L which grip the handle are detected, as indicated in grayscale images 70, 72 of areas Pt, Pt + Δt at respective times t, t + Δt in FIG. 8A.

As shown in FIG. 8B, the upper body area identifying device is also able to identify three high-brightness regions corresponding to the head 50 and the right hand 51R and the left hand 51L which grip the handle, from binarized images 70bn, 72bn converted from the grayscale images 70, 72.

The upper body and lower body area identifying device also includes a lower body area identifying device for identifying a lower body area Pd of the bicycle rider below the upper body area Pu. The lower body area Pd includes two high-brightness regions estimated as both feet (both legs), i.e., a right foot (right leg) 52R and a left foot (left leg) 52L. The two high-brightness regions make shape changes (vertical pedaling movement) and periodic movement (vertical pedal movement) when the object is moving. On the other hand, the upper body area Pu includes the three high-brightness regions, which make no or little shape changes when the object is moving.

In this case as well, from the binarized images 70bn, 72bn converted from the grayscale images 70, 72, the lower body area identifying device is also able to identify an area including two high-brightness regions corresponding to the both feet (both legs), i.e., the right foot (right leg) 52R and the left foot (left leg) 52L, which make shape changes (vertical pedaling movement) and periodic movement (vertical pedal movement) when the object is moving, as the lower body area Pd (binarized images 70bn, 72bn) corresponding to the lower body area Pd (grayscale images 70, 72), below the upper body area Pu of the binarized images of the bicycle rider corresponding to the upper body area Pu which includes the three high-brightness regions that make no or little shape changes when the object is moving.

In step S4 (shape change detecting device), shape changes in the upper body area Pu and the lower body area are detected.

In the present embodiment, the shape changes are detected as correlation errors between the first reference template 104a and the binarized images 31abn through 31fbn in the areas P1b through P6b, i.e., interframe correlation errors. As described below, an upper body correlation error Eu and a lower body correlation error Ed are calculated as the correlation errors. An entire body correlation error Eall can be calculated from the upper body correlation error Eu and the lower body correlation error Ed, as Eall = Eu + Ed.

More specifically, the upper body correlation error Eu is calculated as correlation errors between the upper body shape 100 of the first reference template 104a and the upper body areas Pu of the binarized images 31abn through 31fbn in the image areas P1b through P6b, e.g., the sum of squares of the differences between the corresponding pixel values. The lower body correlation error Ed is calculated as correlation errors between the lower body shape 102a of the first reference template 104a and the lower body areas Pd of the binarized images 31abn through 31fbn in the image areas P1b through P6b.

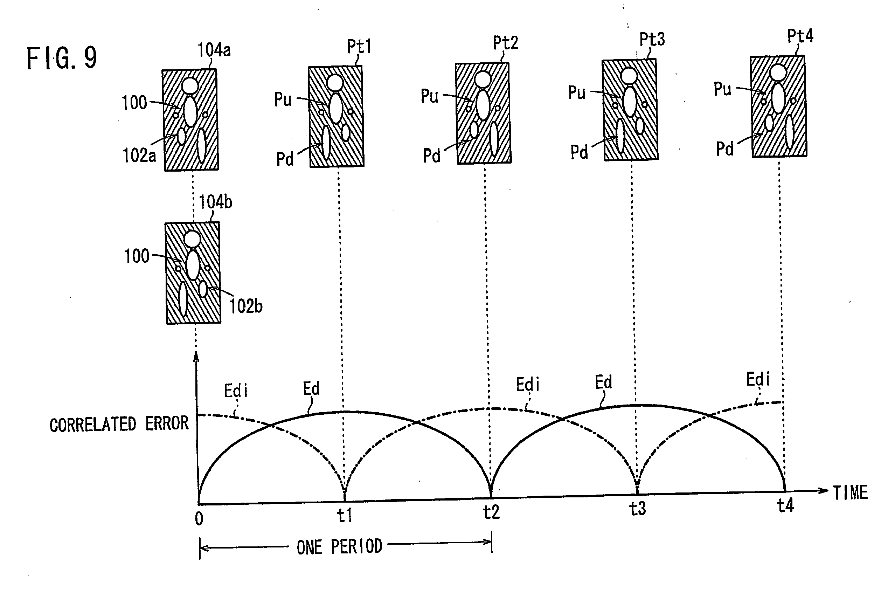

FIG. 9 is illustrative of a calculation of correlation errors corresponding to shape changes at times. At times t1 and t3, the shapes of the lower body areas Pd of the binarized images in the areas Pt1, Pt3 are largely different from (i.e., in opposite phase to) the lower body shape (lower body reference shape) 102a of the first reference template 104a. At times t1 and t3, therefore, the lower body correlation error Ed is maximum. At times t2 and t4, the shapes of the lower body areas Pd of the binarized images in the areas Pt2, Pt4 are substantially the same as (i.e., in phase with) the lower body shape (the lower body reference shape) 102a of the first reference template 104a. At times t2 and t4, therefore, the lower body correlation error Ed is minimum.

In FIG. 9, a lower body correlation error Edi represents correlation errors between the binarized images in the areas Pt1 through Pt4 and the second reference template 104b which is obtained by left-right inverting the first reference template 104a. The detecting accuracy, i.e., the detecting reliability, is thus increased based on the fact that the correlation errors with respect to the first and second reference templates 104a, 104b are in opposite phase to each other.

Though not shown in FIG. 9, the upper body correlation error Eu remains substantially nil at all times as the upper body of the bicycle rider does not move and is kept in the same shape.

In step S5 (difference acquiring device), the difference between the correlation errors of the upper body shape and the lower body shape is calculated (acquired) at each detected time-dependent change. More specifically, in each frame, i.e., at each detection time, the difference ΔE is calculated as ΔE = the lower body correlation error (Ed) - the upper body correlation error (Eu) ≈ the lower body correlation error (Ed).

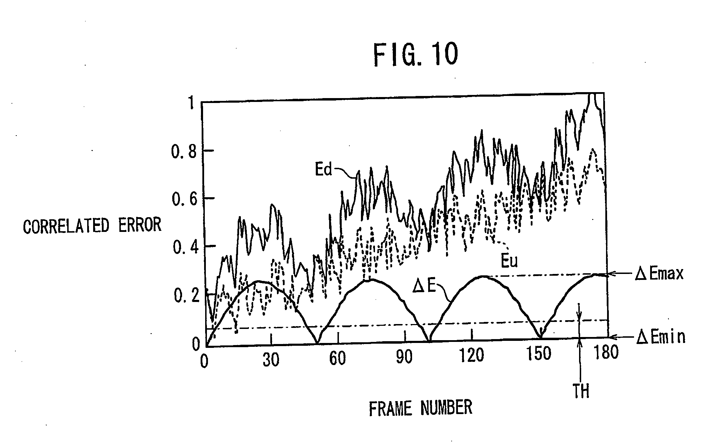

FIG. 10 shows a simulation result for easier understanding of the present invention. As shown in FIG. 10, when a bicycle rider who is pedaling a bicycle, as an object, is relatively approaching the vehicle 12 while facing toward or away from the vehicle 12, both the upper body correlation error Eu and the lower body correlation error Ed tend to increase in frames ranging from frame number 0 to frame number 180.

The increasing tendency is caused for the following reasons: First, as the first reference template is enlarged, aliasing (blurring) becomes large, thereby increasing the differential error. Secondly, there is an increasing error related to a change in the brightness of the object depending on the distance between the object and the vehicle. Thirdly, there is an increasing error due to a background change (noise).

The lower body correlation error Ed is larger in level than the upper body correlation error Eu because the lower body moves greater than the upper body in each of the frames. Additionally, the lower body correlation error Ed has another feature that the amplitude thereof periodically increases and decreases in synchronism with the bicycle rider's pedaling action.

In step S5, the difference (correlation error difference) ΔE is calculated by subtracting the upper body correlation error Eu from the lower body correlation error Ed.

Since an error due to enlargement of the reference template 104a, an error related to the brightness change of the object depending on the distance, and an error due to the background change, which are commonly included in the upper and lower body correlation errors Eu, Ed, are removed, the difference ΔE is appropriately detected as having periodic amplitude increases and decreases.

In step S6 (bicycle rider determining device), it is determined whether the amplitude (ΔEmax - ΔEmin) of the difference ΔE as a detected time-dependent change is of a value greater than a threshold value TH (TH = 0.05 in the present embodiment) {the difference (ΔE) > the threshold value (TH)} or not. If the amplitude (ΔEmax - ΔEmin) of the difference ΔE is of a value greater than the threshold value TH, then the object is basically judged as a bicycle rider.

In step S7, it is determined whether the amplitude period of the difference ΔE falls within a period (generally, 0.88 [Hz]) corresponding to the speed of the bicycle or not.

If the amplitude period of the difference ΔE falls within the period corresponding to the speed of the bicycle, then it is determined whether the upper body shape moves vertically or not in step S8.

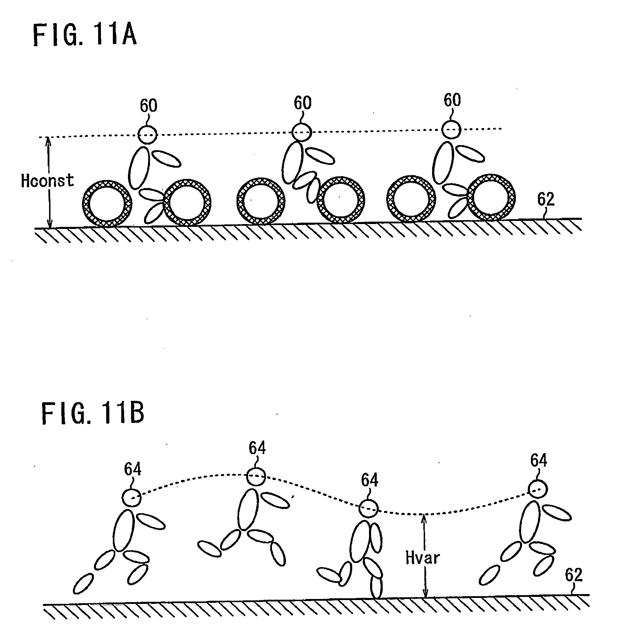

As shown in FIG. 11A, the height (road height) H of the head 60 of the bicycle rider from the road 62 is a constant height Hconst (H = Hconst). On the other hand, as shown in FIG. 11B, the head 64 of a person who is jogging moves vertically, and the road height H of the head 64 is represented by a periodically varying height Hvar.

If it is judged that the upper body shape does not vertically move in step S8, then the object is finally judged as a bicycle rider in step S9.

When the object is finally judged as a bicycle rider, if the object is likely to be in a collision course with the vehicle 12 based on the operated amount Br output from the brake sensor 20, the vehicle speed Vs output from the vehicle speed sensor 18, the yaw rate Yr output from the yaw rate sensor 22, and the distance from the vehicle 12 up to the object (i.e., the bicycle rider), then the grayscale image of the bicycle rider is displayed on the HUD 26a, and an audible warning is issued through the speaker 24, prompting the driver of the vehicle 12 to take an action to avoid the possible collision with the bicycle rider. If the driver of the vehicle 12 appropriately brakes the vehicle 12 and there is no possibility of collision, then no audible warning is issued through the speaker 24, so that the driver will not be unnecessarily troubled.

If the answer to either one of steps S6, S7, S8 is negative, then the object is finally judged as something other than a bicycle rider. The process of determining a pedestrian according to the related art may be carried out after step S10.

According to the present embodiment, as described above, the vehicle vicinity monitoring apparatus 10 converts grayscale images acquired by the infrared cameras 16R, 16L mounted on the vehicle 12 into binarized images. For detecting an object, i.e., a bicycle rider who is pedaling a bicycle, from the binarized images, the upper body and lower body area identifying device (step S3) identifies an area including upper and lower bodies estimated as the object from the binarized images. Then, the shape change detecting device (step S4) detects time-dependent changes of the upper and lower body shapes in the identified area including the upper and lower bodies. The difference acquiring device (step S5) acquires the difference between the upper and lower body shapes at each of the detected time-dependent changes. If the amplitude of the difference is of a value greater than the threshold value, then the bicycle rider determining device (step S6) judges the object as the bicycle rider. The vehicle vicinity monitoring apparatus 10 is thus able to detect a bicycle rider near the vehicle 12 at night.

The upper body and lower body area identifying device (step S3) can appropriately estimate the object as a bicycle rider if the object has a feature that the upper body has a smaller time-dependent change and the lower body has a greater time-dependent change.

The shape change detecting device (step S4) has the reference template 104 including the reference bicycle rider shape made up of a certain upper body shape and a certain lower body shape. Thus, the shape change detecting device can detect time-dependent changes of the upper body shape and the lower body shape in the identified area including the upper and lower bodies by subtracting the upper body shape and the lower body shape in the identified area including the upper and lower bodies from the upper body shape and the lower body shape in the reference bicycle rider shape.

The reference template 104 comprises the first reference template 104a including the first reference bicycle rider shape wherein the right foot is positioned upwardly of the left foot in the lower body shape as viewed in front elevation, and the second reference template 104b including the second reference bicycle rider shape wherein the right foot is positioned downwardly of the left foot in the lower body shape as viewed in front elevation, the second reference template 104b being the left-right reversal of the first reference template 104a. The shape change detecting device (step S4) can detect time-dependent changes of the upper body shape and the lower body shape, using the first and second reference templates 104a, 104b.

The upper body and lower body area identifying device (step S3) identifies an area including upper and lower bodies estimated as the object from the binarized images. The upper body and lower body should preferably include the upper body area identifying device for identifying the upper body area of the bicycle rider as the object if three high-brightness regions estimated as the head and the right hand and the left hand which grip the handle are detected.

Heretofore, it has been difficult to detect a bicycle rider. However, according to the present embodiment, the vehicle vicinity monitoring apparatus 10 can detect such a bicycle rider as an object highly accurately from images output from infrared cameras.

In the above embodiment, the vehicle vicinity monitoring apparatus 10 converts grayscale images acquired by the infrared cameras 16R, 16L mounted on the vehicle 12 into binarized images. For detecting an object, i.e., a bicycle rider who is pedaling a bicycle, from the binarized images, the upper body and lower body area identifying device (step S3) identifies an area including upper and lower bodies estimated as the object from the binarized images. However, the upper body and lower body area identifying device may identify an area including upper and lower bodies estimated as the object from the grayscale images acquired by the infrared cameras 16R, 16L.

In such a case, the shape change detecting device (step S4) detects time-dependent changes of the grayscale images of the upper and lower body shapes in the identified area including the upper and lower bodies. The difference acquiring device (step S5) acquires the difference between the upper and lower body shapes in the grayscale images at each of the detected time-dependent changes. If the amplitude of the difference is of a value greater than the threshold value, then the bicycle rider determining device (step S6) judges the object as the bicycle rider.

In the above embodiment, time-dependent shape changes of the binarized images converted from the grayscale images are detected based on the reference templates (the first and second reference templates 104a, 104b) of binarized image schematically shown in FIG. 3. However, a reference template of grayscale image may be used instead of the reference template of binarized image. For example, time-dependent shape changes in the grayscale images 31b through 31f of the areas P2 through P6 may be detected using, as a reference template, the grayscale image 31a of the area P1 among the areas P1 through P6 (see FIG. 7A) including the upper and lower bodies identified from the grayscale images 30a through 30f (see FIG. 6) acquired by the infrared cameras 16R, 16L.

Alternatively, the binarized image 31abn in the area P1b (see FIG. 7B) corresponding to the grayscale image 31a in the area P1 may be used as a reference template.

### (Other Embodiments)

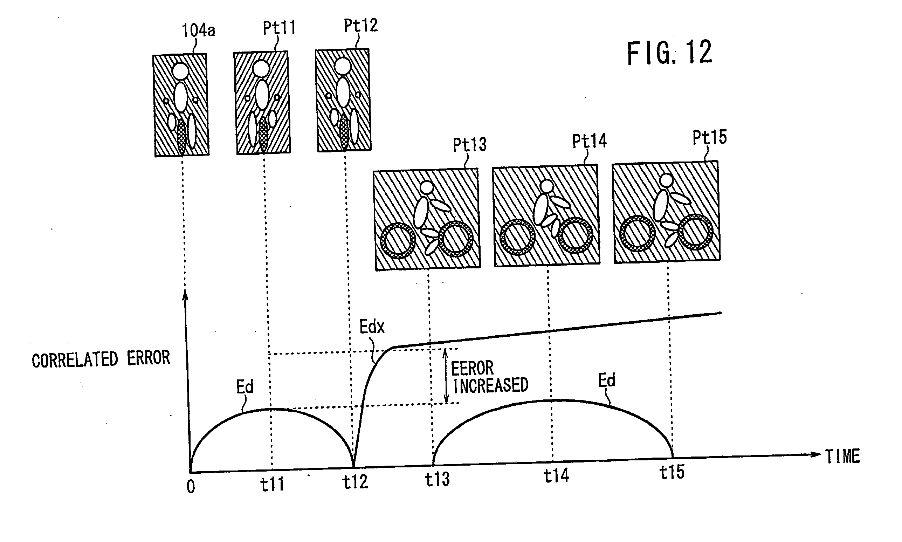

The vehicle vicinity monitoring apparatus 10 should preferably further include a direction-of-travel detecting device for detecting a change in the direction of travel of the object, i.e., the bicycle rider, if the correlation error Ed derived from time-dependent changes of the upper and lower body shapes in the identified area including the upper and lower bodies, detected by the shape change detecting device, abruptly changes, as indicated by a correlation error Edx between time t12 and time t13 in FIG. 12.

In such a case, a highly reliable correlation error Ed in areas Pt11, Pt12 is detected based on the first reference template 104a until a time shortly after time t12. Based on an increase in the correlation error subsequent to time t12, the direction of travel of the bicycle rider is estimated as having changed from a front-back direction to a left-right direction after time t12, and the reference template is updated from the first reference template 104a to the reference template 112 shown in FIG. 4, after which the processing in steps S1 through S9 is performed. In this manner, the period of movement is extracted again as indicated by the correlation error Ed subsequent to time t13.

Although certain preferred embodiments of the present invention have been shown and described in detail, it should be understood that various changes and modifications may be made thereto without departing from the scope of the invention as set forth in the appended claims.

## Claims

1. A vehicle vicinity monitoring apparatus (10) for detecting a bicycle rider who is pedaling a bicycle, as an object, from images (30a-30f) captured by infrared cameras (16R, 16L) mounted on a vehicle (12), comprising:
an upper body and lower body area identifying device (14c) for identifying, for each image (30a-30f), an area (P1-P6) including upper and lower bodies, which area (P1-P6) is estimated as the object;
a shape change detecting device (14c) wherein the shape change detecting device (14c) uses a reference template (104; 112) including a reference bicycle rider shape (103a, 103b; 110) made up of an upper body reference shape (100; 106) and a lower body reference shape (102a, 102b; 108), and the shape change detecting device (14c) detects, for each image (30a - 30f), a change of the upper body shape (Pu) in the identified area (P1-P6) as an upper body correlation error Eu between the upper body reference shape (100; 106) and the upper body shape (Pu) in the identified area (P1-P6) and a change of the lower body shape (Pd) in the identified area (P1-P6) as a lower body correlation error Ed between the lower body reference shape (102a, 102b; 108) and the lower body shape (Pd) in the identified area (P1-P6);
a difference acquiring device (14c) for acquiring, for each image (30a-30f), a difference (ΔE=Ed-Eu) between the lower body correlation error Ed and the upper body correlation error Eu, and
a bicycle rider determining device for judging the object as the bicycle rider if the amplitude (ΔEmax-ΔEmin) of this difference (ΔE) as a detected time-dependent change is of a value greater than a threshold value (TH).

2. A vehicle vicinity monitoring apparatus (10) according to claim 1,
wherein the reference template (104) comprises :
a first reference template (104a) including a first reference bicycle rider shape (103a) as viewed in front elevation, in which a right foot (Rf 102a) of the bicycle rider is positioned upwardly of a left foot (RI 102a) in the lower body shape (102a); and
a second reference template (104b) including a second reference bicycle rider shape (103b) as viewed in front elevation, in which a right foot (Rf 102b) of the bicycle rider is positioned downwardly of a left foot (RI 102b) in the lower body shape (102b), the second reference template (104b) being the left-right reversal of the first reference template (104a);
wherein the shape change detecting device (14c) detects the lower body correlation error (Ed) and the upper body correlation error (Eu), using the first reference template (104a) and the second reference template (104b).

3. A vehicle vicinity monitoring apparatus (10) according to claim 1 or 2 , further comprising:
a direction-of-travel detecting device (14c) for detecting a change in a direction of travel of the bicycle rider which is the object, if each of the lower body correlation error (Ed) and the upper body correlation error (Eu), detected by the shape change detecting device (14c), abruptly changes.

4. A vehicle vicinity monitoring apparatus according to one of claims 1 to 3, wherein the upper body and lower body area identifying device (14c) includes an upper body area identifying device (14c) for identifying an upper body area (Pu) of the bicycle rider which is the object if three high-brightness regions estimated as a head and a right hand (Rh) and a left hand (Lh) which grip the handle of the bicycle are detected.

## Patentansprüche

1. Fahrzeugumgebung-Überwachungseinrichtung (10) zum Detektieren eines in die Pedale eines Fahrrades tretenden Fahrradfahrers als ein Objekt, aus Bildern (30a-30f), die durch an einem Fahrzeug (12) angebrachte Infrarot-Kameras (16R, 16L) erfasst werden, umfassend:
eine Oberkörper-und-Unterkörper-Bereich-Identifizierungseinrichtung (14c), um für jedes Bild (30a-30f) einen Bereich (P1-P6) zu identifizieren, der einen Oberkörper und einen Unterkörper umfasst, wobei dieser Bereich (P1-P6) als das Objekt abgeschätzt wird,
einer Formänderung-Detektionseinrichtung (14c), wobei die Formänderung-Detektionseinrichtung (14c) eine Referenz-Vorlage (104; 112) verwendet, die eine Referenz-Fahrradfahrer-Form (103a, 103b; 110) umfasst, die gebildet ist aus einer Oberkörper-Referenz-Form (100; 106) und einer Unterkörper-Referenz-Form (102a, 102b; 108), und wobei die Formänderung-Detektionseinrichtung (14c) für jedes Bild (30a-30f) eine Änderung der Oberkörper-Form (Pu) in dem identifizierten Bereich (P1-P6) als einen Oberkörper-Korrelationsfehler Eu zwischen der Oberkörper-Referenz-Form (100; 106) und der Oberkörper-Form (Pu) in dem identifizierten Bereich (P1-P6) detektiert, und eine Änderung der Unterkörper-Form (Pd) in dem identifizierten Bereich (P1-P6) als einen Unterkörper-Korrelationsfehler Ed zwischen der Unterkörper-Referenzform (102a, 102b; 108) und der Unterkörper-Form (Pd) in dem identifizierten Bereich (P1-P6) detektiert,
eine Differenz-Beschaffungseinrichtung (14c), um für jedes Bild (30a-30f) eine Differenz (ΔE=Ed-Eu) zwischen dem Unterkörper-Korrelationsfehler Ed und dem Oberkörper-Korrelationsfehler Eu zu beschaffen, und
eine Fahrradfahrer-Bestimmungseinrichtung, um das Objekt als den Fahrradfahrer zu beurteilten, wenn die Amplitude (ΔEmax-ΔEmin) dieser Differenz (ΔE) als einer detektierten zeitabhängigen Änderung einen Wert aufweist, der größer ist, als ein Schwellenwert (TH).

2. Fahrzeugumgebung-Überwachungseinrichtung (10) nach Anspruch 1, wobei die Referenz-Vorlage (104) umfasst:
eine erste Referenz-Vorlage (104a), welche eine erste Referenz-Fahrradfahrer-Form (103a) umfasst, bei Betrachtung in einer Vorderansicht, wobei ein rechter Fuß (Rf 102a) des Fahrradfahrers oberhalb von einem linken Fuß (RI 102a) in der Unterkörper-Form (102a) positioniert ist, und
eine zweite Referenz-Vorlage (104b), die eine zweite Referenz-Fahrradfahrer-Form (103b) umfasst, bei einer Betrachtung in einer Vorderansicht, wobei ein rechter Fuß (Rf 102b) des Fahrradfahrers unterhalb von einem linken Fuß (RI 102b) in der Unterkörper-Form (102b) positioniert ist, wobei die zweite Referenz-Vorlage (104b) die Links-Rechts-Umkehrung der ersten Referenz-Vorlage (104a) ist,
wobei die Formänderung-Detektionseinrichtung (14c) den Unterkörper-Korrelationsfehler (Ed) und den Oberkörper-Korrelationsfehler (Eu) unter Verwendung der ersten Referenz-Vorlage (104a) und der zweiten Referenz-Vorlage (104b) detektiert.

3. Fahrzeugumgebung-Überwachungseinrichtung (10) nach Anspruch 1 oder 2, weiter umfassend:
eine Fahrtrichtung-Detektionseinrichtung (14c), um eine Änderung in einer Fahrtrichtung des Fahrradfahrers zu detektieren, der das Objekt ist, wenn sowohl der Unterkörper-Korrelationsfehler (Ed) als auch der Oberkörper-Korrelationsfehler (Eu), die durch die Formänderung-Detektionseinrichtung (14c) detektiert werden, sich abrupt ändern.

4. Fahrzeugumgebung-Überwachungseinrichtung nach einem der Ansprüche 1 bis 3, wobei die Oberkörper-und-Unterkörper-Bereich-Identifizierungseinrichtung (14c) eine Oberkörper-Bereich-Identifizierungseinrichtung (14c) umfasst, um einen Oberkörper-Bereich (Pu) des Fahrradfahrers zu identifizieren, der das Objekt ist, wenn drei Regionen mit hoher Helligkeit detektiert werden, die abgeschätzt werden als ein Kopf sowie eine rechte Hand (Rh) und eine linke Hand (Lh), die den Lenker des Fahrrades ergreifen.

## Revendications

1. Appareil de surveillance de voisinage de véhicule (10) pour détecter un cycliste qui pédale sur une bicyclette, en tant qu'objet, à partir d'images (30a-30f) capturées par des caméras infrarouges (16R, 16L) montées sur un véhicule (12), comprenant:
un dispositif d'identification d'une zone supérieure du corps et d'une zone inférieure du corps (14c) pour identifier, pour chaque image (30a-30f), une zone (P1-P6) incluant des corps supérieur et inférieur, laquelle zone (P1-P6) est estimée comme étant l'objet;
un dispositif de détection de changement de forme (14c), dans lequel le dispositif de détection de changement de forme (14c) utilise un masque de référence (104; 112) incluant une forme de cycliste de référence (103a, 103b; 110) faite d'une forme de référence de corps supérieur (100; 106) et d'une forme de référence de corps inférieur (102a, 102b; 108), et le dispositif de détection de changement de forme (14c) détecte, pour chaque image (30a-30f), un changement de forme du corps supérieur (Pu) dans la zone identifiée (P1-P6) comme une erreur de corrélation Eu de corps supérieur entre la forme de référence de corps supérieur (100; 106) et la forme de corps supérieur (Pu) dans la zone identifiée (P1-P6) et un changement de forme du corps inférieur (Pd) dans la zone identifiée (P1-P6) comme une erreur de corrélation Ed de corps inférieur entre la forme de référence de corps inférieur (102a, 102b; 108) et la forme de corps inférieur (Pd) dans la zone identifiée (P1-P6);
un dispositif d'acquisition d'une différence (14c) pour acquérir, pour chaque image (30a-30f), une différence (ΔE=Ed-Eu) entre l'erreur de corrélation de corps inférieur Ed et l'erreur de corrélation de corps supérieur Eu et
un dispositif de détermination d'un cycliste pour estimer l'objet comme le cycliste si l'amplitude (ΔEmax-ΔEmin) de cette différence (ΔE) comme changement détecté en fonction du temps a une valeur supérieure à une valeur de seuil (TH).

2. Appareil de surveillance de voisinage de véhicule (10) suivant la revendication 1, dans lequel le masque de référence (104) comprend:
un premier masque de référence (104a) incluant une première forme de cycliste de référence (103a) telle que vue en élévation frontale, dans laquelle un pied droit (Rf 102a) du cycliste est positionné vers le haut d'un pied gauche (R1 102a) dans la forme de corps inférieur (102a);
et
un deuxième masque de référence (104b) incluant une deuxième forme de cycliste de référence (103b) telle que vue en élévation frontale, dans laquelle un pied droit (Rf 102b) du cycliste est positionné vers le bas d'un pied gauche (R1 102b) dans la forme de corps inférieur (102b), le deuxième masque de référence (104b) étant l'image miroir gauche-droite du premier masque de référence (104a);
dans lequel le dispositif de détection de changement de forme (14c) détecte l'erreur de corrélation de corps inférieur (Ed) et l'erreur de corrélation de corps supérieur (Eu), à l'aide du premier masque de référence (104a) et du deuxième masque de référence (104b).

3. Appareil de surveillance de voisinage de véhicule (10) suivant la revendication 1 ou 2, comprenant en outre:
un dispositif de détection d'une direction de déplacement (14c) pour détecter un changement de direction de déplacement du cycliste qui est l'objet, si l'erreur de corrélation de corps inférieur (Ed) et l'erreur de corrélation de corps supérieur (Eu), détectées par le dispositif de détection de changement de forme (14c), changent toutes deux brusquement.

4. Appareil de surveillance de voisinage de véhicule suivant l'une des revendications 1 à 3, dans lequel le dispositif d'identification de zone de corps supérieur et de zone de corps inférieur (14c) inclut un dispositif d'identification de zone de corps supérieur (14c) pour identifier une zone de corps supérieur (Pu) du cycliste qui est l'objet si trois régions de luminosité élevée estimées comme étant une tête et une main droite (Rh) et une main gauche (Lh) qui saisissent le guidon de la bicyclette sont détectées.
